# FASCICULE DE BREVET EUROPEEN

(11) **EP 3 807 133 B1**
(45) Date de publication et mention de la délivrance du brevet: **30.11.2022**
(21) Numéro de dépôt: 19729063.8
(22) Date de dépôt: 12.06.2019
(51) Int. Cl.: B60S 1/56

(54) **DISPOSITIF DE NETTOYAGE TELESCOPIQUE POUR VEHICULE AUTOMOBILE**
TELESKOPISCHE REINIGUNGSVORRICHTUNG FÜR EIN KRAFTFAHRZEUG
TELESCOPIC CLEANING DEVICE FOR MOTOR VEHICLE

(30) Priorité: 14.06.2018 FR 1855241
(43) Date de publication de la demande: 21.04.2021
(73) Titulaire: Valeo Systèmes d'Essuyage, 78322 Le Mesnil Saint Denis (FR)
(72) Inventeur: BAUDOUIN, Maxime, 63500 ISSOIRE (FR); VIEILLE, Jordan, 63500 ISSOIRE (FR); ROUSSEAU, Jean-François, 63500 ISSOIRE (FR); PICOT, Philippe, 63500 ISSOIRE (FR)
(74) Mandataire: Valeo Visibility
(86) Numéro de dépôt international: PCT/EP2019/065362
(87) Numéro de publication internationale: WO 2019/238764

(56) Documents cités:
- US-A- 5 657 929
- US-A1- 2015 172 582
- US-A1- 2018 086 318

## Description

Le domaine de la présente invention concerne les systèmes de nettoyage destinés aux véhicules automobiles, et plus particulièrement les systèmes de nettoyage destinés au nettoyage de systèmes d'aide à la conduite équipant de tels véhicules.

Les véhicules automobiles les plus récents sont équipés d'un ensemble de systèmes d'aide à la conduite permettant d'assister le conducteur ou de le remplacer pour certaines manœuvres. Ces systèmes d'aide à la conduite sont mis en œuvre par l'intermédiaire d'informations détectées par un ou plusieurs capteurs/émetteurs. Il importe dans ce contexte que chaque capteur/émetteur soit parfaitement propre, de façon à ne pas risquer un non-déclenchement ou un déclenchement inopiné du système.

Il est connu de nettoyer les capteurs/émetteurs de ce type à l'aide d'un produit nettoyant projeté par un dispositif de pulvérisation. Le produit nettoyant permet de dissoudre les saletés sur le capteur/émetteur. Néanmoins, le séchage subséquent du produit nettoyant laisse un résidu sur l'optique de la caméra pouvant altérer l'image et provoquer un déclenchement inopiné et dangereux du système auquel le capteur/émetteur est associé.

Il est dès lors connu des dispositifs de nettoyage dans lesquels, outre un liquide de nettoyage, projeté dans un premier temps sur la surface optique pour nettoyer cette surface optique et chasser les saletés, on prévoit de projeter sur la surface optique un fluide de séchage, et par exemple de l'air. Ainsi, juste après un cycle de nettoyage par projection de liquide depuis l'embout de distribution disposé à l'extrémité du dispositif de nettoyage, de l'air est transporté vers cet embout de distribution puis projeté sur la surface optique. Cette succession d'opérations permet un nettoyage performant du capteur/émetteur optique.

Une solution simple à mettre en œuvre est de prévoir deux dispositifs distincts pour le liquide de nettoyage et pour le fluide de séchage, et de piloter successivement l'un puis l'autre. On comprend toutefois qu'une telle mise en œuvre est encombrante et que l'on peut rechercher une solution plus compacte.

Il est connu des dispositifs de nettoyage dans lesquels un même embout de distribution permet la projection sur une même surface optique d'une part d'un liquide de nettoyage et d'autre part d'air sous pression notamment pour former un fluide de séchage. Plus particulièrement, ces systèmes de nettoyage peuvent être télescopiques en ce que l'embout de distribution est disposé à l'extrémité d'un corps déployable par un mouvement de translation entre deux positions parmi lesquelles une position rétractée dans laquelle l'embout est rangé dans le volume d'un élément de carrosserie du véhicule à proximité de la surface optique du capteur/émetteur, et une position déployée où les buses de projection de liquide de nettoyage et d'air sont en regard de cette surface optique.

Selon des exemples de réalisation, l'embout peut comporter deux buses de projection agencées côte à côte et servant respectivement à la projection d'un des fluides, ou bien comporter une unique buse de projection avec un passage alternatif du fluide de nettoyage et de l'air dans cette unique buse.

Le process de nettoyage associé peut notamment consister en un déploiement du dispositif télescopique puis une projection de fluide de nettoyage lorsque le dispositif est en position déployée, puis une projection d'air pour le séchage du liquide de nettoyage lors du déplacement retour du dispositif, depuis la position déployée vers la position rétractée.

Un des inconvénients des systèmes actuels réside dans le fait que des systèmes de détection de la présence d'eau et/ou de de salissures sur les capteurs/émetteurs permettent de détecter la présence d'un élément étranger sur le capteur/émetteur, mais sans en distinguer le type. Par exemple, de tels systèmes ne font pas la différence entre une goutte d'eau ou une poussière. Or, il existe des situations dans lesquelles la projection d'air est suffisante pour assurer le nettoyage du capteur/émetteur, par exemple pour sécher ces capteurs/émetteurs par temps de pluie. Dès lors, le nettoyage de ces capteurs/émetteurs dans de telles situations est inutilement consommateur de liquide de nettoyage.

Le document US 5 657 929 A divulgue un dispositif de nettoyage télescopique selon le préambule de la revendication 1.

La présente invention s'inscrit dans ce contexte en proposant un dispositif de nettoyage télescopique apte à ne projeter que de l'air ou à projeter de l'air et un fluide de nettoyage afin d'adapter le nettoyage du capteur/émetteur à chaque situation, et ainsi de réaliser des économies sur les quantités de liquide de nettoyage utilisées et d'éviter un déploiement du dispositif télescopique qui ne soit pas nécessaire.

Avantageusement, la présente invention permet par ailleurs de réaliser un pré-nettoyage avant qu'ait lieu la projection de liquide de nettoyage de sorte à optimiser le nettoyage.

L'invention est exposée dans le jeu de revendications joint.

La présente invention concerne ainsi un dispositif de nettoyage télescopique, destiné à projeter au moins un premier fluide et au moins un deuxième fluide vers une surface extérieure d'un capteur/émetteur d'un véhicule automobile, le dispositif de nettoyage télescopique comprenant un embout de distribution dans lequel sont disposés au moins un premier orifice de distribution du premier fluide et au moins un deuxième orifice de distribution du deuxième fluide, le dispositif de nettoyage télescopique étant configuré pour se déployer le long d'un axe de déploiement, entre une première position rétractée et une deuxième position déployée. Selon l'invention, le premier orifice de distribution et le deuxième orifice de distribution sont décalés l'un par rapport à l'autre le long de l'axe de déploiement du dispositif de nettoyage.

Ainsi, le dispositif de nettoyage télescopique est particulier en ce que l'embout de distribution comporte deux buses de projection, ou orifices de distribution, agencées en deux étages le long de la direction de déploiement du dispositif télescopique.

Plus particulièrement, les orifices de distribution s'étendent à des distances différentes de l'extrémité du corps qui porte l'embout de distribution avec l'orifice de distribution qui assure la projection d'air qui est à une distance par rapport à cette extrémité du corps plus grande que la distance à laquelle se trouve l'orifice de distribution qui assure la projection de liquide de nettoyage.

De la sorte, dans la position rétractée du dispositif de nettoyage télescopique, la sortie de liquide de nettoyage peut être cachée sous la surface de carrosserie dans laquelle s'inscrit la surface à nettoyer, et la sortie d'air est opérationnelle.

Selon l'invention, un décalage mesuré entre le premier orifice de distribution et le deuxième orifice de distribution, parallèlement à l'axe de déploiement du dispositif de nettoyage télescopique, est non nul. Par exemple, ce décalage peut être compris entre deux et trente millimètres.

Selon l' invention, le dispositif de nettoyage télescopique est configuré pour se déployer entre une première position et une deuxième position, la première position correspondant à une position rétractée dans laquelle seul le premier orifice de distribution est dégagé et libre et la deuxième position correspondant à une position déployée dans laquelle le premier orifice de distribution et le deuxième orifice de distribution sont dégagés et libres. Autrement dit, le dispositif de nettoyage télescopique dans sa première position est configuré pour projeter uniquement le premier fluide tandis que le dispositif de nettoyage télescopique dans sa deuxième position est configuré pour pouvoir projeter le premier fluide et/ou le deuxième fluide. Par exemple, la première position du dispositif de nettoyage télescopique correspond à une position rétractée du dispositif de nettoyage avec la tête de distribution escamotée en partie dans l'élément de carrosserie en saillie duquel peut s'étendre la tête de distribution tandis que la deuxième position correspond à une position déployée de ce dispositif de nettoyage télescopique. On comprend alors que la présente invention permet avantageusement de projeter le premier fluide quelle que soit la position du dispositif de nettoyage télescopique et que la projection du deuxième fluide nécessite quant à elle le déploiement de ce dispositif de nettoyage télescopique.

Selon une caractéristique de la présente invention, le dispositif de nettoyage télescopique comprend au moins un premier orifice d'admission du premier fluide et au moins un deuxième orifice d'admission du deuxième fluide, le premier orifice d'admission étant relié au premier orifice de distribution par un premier canal et le deuxième orifice d'admission étant relié au deuxième orifice de distribution par un deuxième canal distinct du premier canal. On comprend donc que le dispositif de nettoyage télescopique est configuré pour comporter deux canaux distincts l'un de l'autre, depuis l'admission jusqu'à la distribution, de sorte que le premier fluide et le deuxième fluide ne sont jamais en contact.

Selon l'invention, le dispositif de nettoyage télescopique comprend un corps d'acheminement qui comprend au moins une partie fixe et une partie mobile, l'embout de distribution étant ménagé en extrémité de la partie mobile.

Selon une caractéristique de la présente invention, la partie fixe du corps d'acheminement comprend au moins un dispositif de rappel élastique configuré pour permettre la rétractation du dispositif de nettoyage télescopique. Selon l'invention, un niveau de compression de ce dispositif de rappel élastique dépend d'une quantité de deuxième fluide présent dans la première portion du deuxième canal. Autrement dit, l'accumulation de deuxième fluide dans la première portion du deuxième canal entraine la compression du dispositif de rappel élastique qui, à son tour, entraine le coulissement de la partie mobile du corps d'acheminement du dispositif de nettoyage télescopique. Une fois le deuxième canal vidé de ce deuxième fluide, le dispositif de rappel élastique tend à reprendre une position initiale, entrainant alors la rétractation de la partie mobile. Avantageusement, on comprend que le dispositif de nettoyage télescopique n'est ainsi déployé que lorsque la projection du deuxième fluide est nécessaire.

Par exemple, la partie mobile du corps d'acheminement du dispositif de nettoyage télescopique selon l'invention est réalisée de sorte que la deuxième portion du deuxième canal ménagée dans cette partie mobile ne soit accessible au deuxième fluide que lorsque le dispositif de nettoyage télescopique est déployé. Autrement dit, lorsque le dispositif de nettoyage télescopique est dans sa première position, la partie mobile obstrue la deuxième portion du deuxième canal et, lorsque le dispositif de nettoyage télescopique est dans sa deuxième position, la deuxième portion du deuxième canal est libérée de sorte à pouvoir recevoir le deuxième fluide.

Avantageusement, au moins le deuxième orifice d'admission du deuxième fluide est équipé d'un moyen d'obturation configuré pour prendre au moins une position ouverte dans laquelle il autorise l'admission du deuxième fluide dans le deuxième canal et au moins une position fermée dans laquelle il interdit l'admission du deuxième fluide dans le deuxième canal. Plus particulièrement, le moyen d'obturation est configuré pour autoriser ou interdire l'admission de deuxième fluide dans la première portion du deuxième canal. On comprend donc que, lorsque le moyen d'obturation est dans sa position fermée, le dispositif de nettoyage télescopique est dans sa première position et quand le moyen d'obturation est dans sa position ouverte, la première portion du deuxième canal se remplit de deuxième fluide entrainant ainsi le déploiement du dispositif de nettoyage télescopique selon l'invention jusqu'à sa deuxième position. Alternativement, le moyen d'obturation peut être agencé sur un orifice de sortie d'un réservoir contenant le deuxième fluide.

Selon des caractéristiques de l'invention, le premier fluide est de l'air comprimé et le deuxième fluide est un liquide de nettoyage. Et le premier orifice de distribution associé à l'air comprimé est agencé dans l'embout de distribution à plus grande distance que ne l'est le deuxième orifice de distribution associé au liquide de nettoyage.

Autrement dit, la présente invention offre la possibilité de souffler de l'air sans déployer le dispositif de nettoyage télescopique. Cet air permet d'une part de sécher la surface extérieure du capteur/émetteur après le nettoyage de celle-ci, et d'autre part de sécher cette surface extérieure du capteur/émetteur en cas de pluie. Avantageusement, cet air permet en outre d'effectuer un pré-nettoyage de la surface extérieure du capteur/émetteur avant que le dispositif de nettoyage télescopique ne soit déployé et ne projette le liquide de nettoyage. On comprend alors que le liquide de nettoyage est projeté sur la surface extérieure du capteur/émetteur uniquement si l'étape de pré-nettoyage à l'air s'avère insuffisante.

Selon des caractéristiques de l'invention, prises seules ou en combinaison, on pourra prévoir que :
- l'embout de distribution comporte une face de projection en regard de la surface optique à nettoyer et dans laquelle sont disposés les orifices de distribution, ainsi qu'une face de couverture formée par la face d'extrémité axiale de l'embout et du dispositif de nettoyage télescopique, la face de projection étant partiellement escamotée dans la première position pour laisser libre le premier orifice de distribution ménagé dans une partie distale de la face de projection ;
- le premier orifice de distribution est configuré pour former un jet de premier fluide sensiblement perpendiculaire à l'axe de déploiement du dispositif télescopique de nettoyage ;
- le deuxième orifice de distribution comporte une rampe configurée pour rabattre le jet de deuxième fluide en sortie de l'embout de distribution vers la surface du capteur/émetteur à nettoyer.

La présente invention concerne également un véhicule automobile équipé d'un ensemble de détection, le véhicule automobile comprenant au moins un dispositif de nettoyage télescopique selon l'invention, ce dispositif de nettoyage télescopique étant destiné au nettoyage d'une surface extérieure d'au moins un capteur/émetteur de l'ensemble de détection.

Selon une caractéristique de la présente invention, un angle formé entre une direction principale de projection du premier fluide et un plan dans lequel s'inscrit majoritairement la surface extérieure du capteur/émetteur est compris entre -10° et 10°. Avantageusement, cette amplitude de projection permet d'adapter le dispositif de nettoyage télescopique à différents galbes de la surface extérieure du capteur/émetteur à nettoyer.

Selon l'invention, l'ensemble de détection comprend au moins un système de détection de la présence d'eau et/ou de salissures sur la surface extérieure de son capteur/émetteur. Par exemple, ce système de détection de la présence d'eau et/ou de salissures peut comprendre un moyen d'analyse d'images.

Avantageusement, le véhicule automobile comprend également une unité de contrôle configurée pour piloter au moins le déploiement du dispositif de nettoyage télescopique. Autrement dit, l'unité de contrôle est configurée pour piloter au moins le moyen d'obturation du deuxième orifice d'admission du deuxième fluide. Tel que précédemment évoqué, c'est l'admission de ce deuxième fluide dans le deuxième canal, et plus particulièrement dans la première portion du canal, qui permet le déploiement du dispositif de nettoyage.

L'invention concerne encore un procédé de nettoyage d'une surface extérieure d'un capteur/émetteur d'un ensemble de détection d'un véhicule automobile selon l'invention, au cours duquel une unité de contrôle reçoit une première information relative à la détection de la présence d'eau et/ou de salissures sur la surface extérieure du capteur/émetteur, le procédé comprenant, lorsque la première information relative à la détection de la présence d'eau et/ou de salissures est positive, au moins une première étape au cours de laquelle l'unité de contrôle transmet une première instruction au dispositif de nettoyage télescopique pour que celui-ci projette le premier fluide, et au moins une deuxième étape de contrôle de la présence d'eau et/ou de salissures sur la surface extérieure du capteur/émetteur par le système de détection. On entend ici par « première information positive », le fait que le système de détection ait effectivement détecté la présence d'eau et/ou de salissures sur la surface extérieure du capteur/émetteur.

Si l'unité de contrôle reçoit, après la réalisation de la deuxième étape, une deuxième information correspondant à une situation dans laquelle le capteur/émetteur est propre, le procédé comprend une troisième étape au cours de laquelle l'unité de contrôle envoie une deuxième instruction au dispositif de nettoyage télescopique qui entraine l'arrêt du procédé de nettoyage.

Si l'unité de contrôle reçoit, après la réalisation de la deuxième étape, une troisième information correspondant à une situation dans laquelle le système de détection détecte la présence d'eau et/ou de salissures sur la surface extérieure du capteur/émetteur, le procédé comprend alors une troisième étape au cours de laquelle l'unité de contrôle envoie une troisième instruction au dispositif de nettoyage télescopique qui entraine le déploiement de ce dispositif de nettoyage télescopique, la projection du deuxième fluide sur la surface extérieure du capteur/émetteur puis la projection du premier fluide sur cette surface extérieure du capteur/émetteur, le procédé comprenant en outre au moins une quatrième étape au cours de laquelle le système de détection contrôle la présence d'eau et/ou de salissures sur la surface extérieure du capteur/émetteur.

D'autres caractéristiques, détails et avantages ressortiront plus clairement à la lecture de la description détaillée donnée ci-après, à titre indicatif, en relation avec les figures suivantes :
- la figure 1 illustre, de façon schématique, un véhicule automobile comprenant un dispositif de nettoyage télescopique selon la présente invention ;
- la figure 2 illustre schématiquement une calandre du véhicule automobile illustré sur la figure 1 sur laquelle est intégré le dispositif de nettoyage télescopique selon l'invention ;
- la figure 3 représente le dispositif de nettoyage télescopique selon l'invention, vue selon une coupe longitudinale ;
- la figure 4 illustre une représentation schématique d'un embout de distribution du dispositif de nettoyage télescopique, rendant visible la différence angulaire de projection des différents fluides distribués par l'intermédiaire de l'embout ;
- les figures 5 et 6 illustrent, respectivement, une première position et une deuxième position du dispositif de nettoyage télescopique selon l'invention ;
- les figures 7 et 8 illustrent notamment l'embout de distribution visible sur les figures 5 et 6 et la surface d'un élément de carrosserie en saillie duquel peut se déployer le dispositif de nettoyage selon l'invention, les figures 7 et 8 illustrant respectivement la première position et la deuxième position des figures 5 et 6 ;
- la figure 9 illustre, sous forme synoptique, un procédé de nettoyage mettant en œuvre le dispositif de nettoyage télescopique selon l'invention.

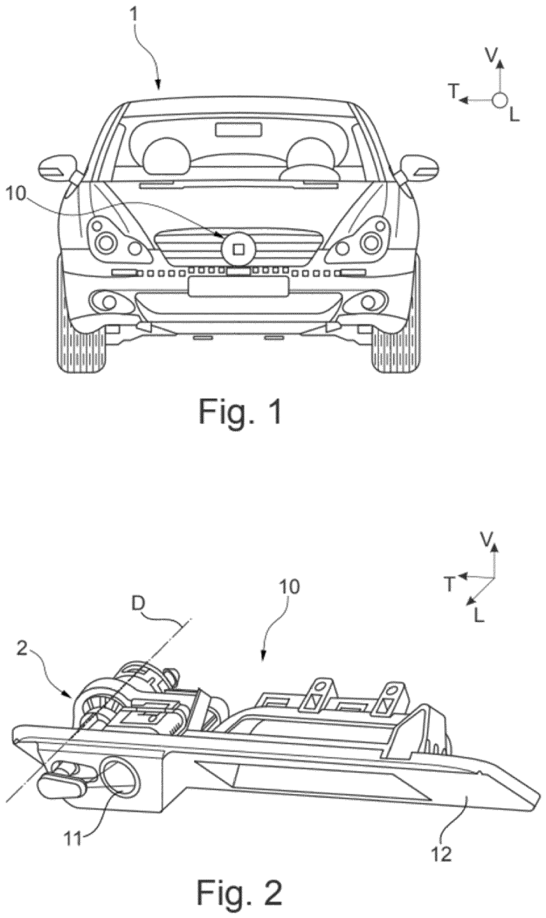

Dans la suite de la description, les termes « longitudinal », « transversal » et « vertical » font référence à une orientation d'un dispositif de nettoyage télescopique selon l'invention, lorsque celui-ci est monté sur un véhicule automobile, et pour laquelle on pourra se référer au trièdre L,V,T illustré sur les figures 1 à 3. Ainsi, une direction longitudinale correspond à une direction principale d'extension de ce dispositif de nettoyage télescopique, cette direction longitudinale étant parallèle à un axe longitudinal L du trièdre illustré sur les figures. Une direction transversale correspond à une direction parallèle à un axe transversal T du trièdre, cet axe transversal T étant perpendiculaire à l'axe longitudinal L. Une direction verticale correspond à une direction parallèle à un axe vertical V du trièdre, cet axe vertical V étant perpendiculaire à l'axe longitudinal L et à l'axe transversal T.

La figure 1 illustre, schématiquement un véhicule automobile 1 qui comprend un ensemble de détection 10 d'un système d'aide à la conduite. Cet ensemble de détection 10 comprend au moins un capteur/émetteur, par exemple un capteur/émetteur tel qu'illustré sur la figure 2, et un dispositif de nettoyage télescopique selon l'invention. Selon l'exemple illustré ici, l'ensemble de détection 10 est agencé sur la face avant du véhicule 1, par exemple au niveau de la calandre. Dans la suite de la description les termes « dispositif de nettoyage télescopique » et « dispositif de nettoyage » seront utilisés sans distinction.

La figure 2 illustre ainsi un exemple d'ensemble de détection 10 qui comprend le capteur/émetteur 11 et le dispositif de nettoyage télescopique 2 selon l'invention, respectivement logés dans un élément support 12 destiné à être fixé sur un élément structurel du véhicule illustré sur la figure 1, telle qu'une calandre de ce véhicule. Le dispositif de nettoyage télescopique 2 est configuré pour nettoyer et/ou sécher le capteur/émetteur 11. Bien entendu, l'ensemble de détection serait conforme à l'invention avec un capteur/émetteur 11 et un dispositif de nettoyage télescopique 2 associé directement fixés sur l'élément structurel du véhicule.

Le dispositif de nettoyage télescopique 2 s'étend majoritairement selon la direction longitudinale et il est configuré pour se déployer le long d'un axe de déploiement D, parallèle à cette direction longitudinale. Ainsi, ce dispositif de nettoyage télescopique 2 est apte à se déplacer entre deux positions extrêmes, parmi lesquelles une première position, également appelée « position rétractée », et une deuxième position, également appelée « position déployée », la figure 2 illustrant le dispositif de nettoyage télescopique dans sa deuxième position. Tel qu'illustré, l'axe de déploiement D est perpendiculaire, ou sensiblement perpendiculaire, à un plan P dans lequel s'inscrit majoritairement le capteur/émetteur 11 à nettoyer et/ou à sécher, et plus particulièrement à un plan dans lequel s'inscrit majoritairement une surface extérieure de ce capteur/émetteur 11. Tel que cela va être décrit ci-après plus en détails, un embout de distribution de fluide est disposé à l'extrémité libre du dispositif de nettoyage télescopique. Dans la position rétractée, le dispositif de nettoyage télescopique étant disposé dans un logement ménagé dans l'élément de structure, l'embout de distribution est au moins en partie logé dans l'élément de structure, tandis que la position déployée, l'embout de distribution est intégralement en saillie de l'élément de structure.

Selon l'invention, le dispositif de nettoyage télescopique 2 est apte à projeter d'une part un premier fluide, et plus particulièrement de l'air, et d'autre part un deuxième fluide, et plus particulièrement un liquide de nettoyage. Tel que cela sera plus amplement détaillé ci-après, le dispositif de nettoyage télescopique 2 selon l'invention est configuré de telle sorte que dans sa première position, le dispositif de nettoyage télescopique peut projeter uniquement le premier fluide, c'est-à-dire souffler de l'air, tandis que dans sa deuxième position, le dispositif de nettoyage télescopique peut projeter le premier fluide et le deuxième fluide, c'est-à-dire souffler de l'air et projeter du liquide de nettoyage. Autrement dit, si la projection d'air suffit à nettoyer ou sécher, par exemple par temps de pluie, le capteur/émetteur 11, et plus particulièrement la surface extérieure de ce capteur/émetteur 11, le dispositif de nettoyage 2 reste dans sa première position, rétractée dans l'élément de structure du véhicule. En revanche, lorsqu'un nettoyage plus important est nécessaire, et notamment par temps sec avec des saletés ou des insectes écrasés sur la surface optique du capteur/émetteur, le dispositif de nettoyage 2 est configuré pour se déployer de sorte à permettre, dans un premier temps, la projection du liquide de nettoyage pour nettoyer la surface extérieure du capteur/émetteur 11 lorsque le dispositif de nettoyage est dans sa position extrême déployée, puis, dans un deuxième temps le cas échéant, la projection d'air, de sorte à sécher le liquide de nettoyage préalablement projeté, au cours du retour en position rétractée du dispositif de nettoyage. On comprend donc que, dans sa position rétractée, le dispositif de nettoyage 2 est apte à sécher la surface extérieure du capteur/émetteur 11, ou à pré-nettoyer cette dernière, et que le dispositif de nettoyage n'est actionné pour prendre sa position déployée que lorsqu'un nettoyage plus intensif de la surface optique du capteur/émetteur 11 est nécessaire.

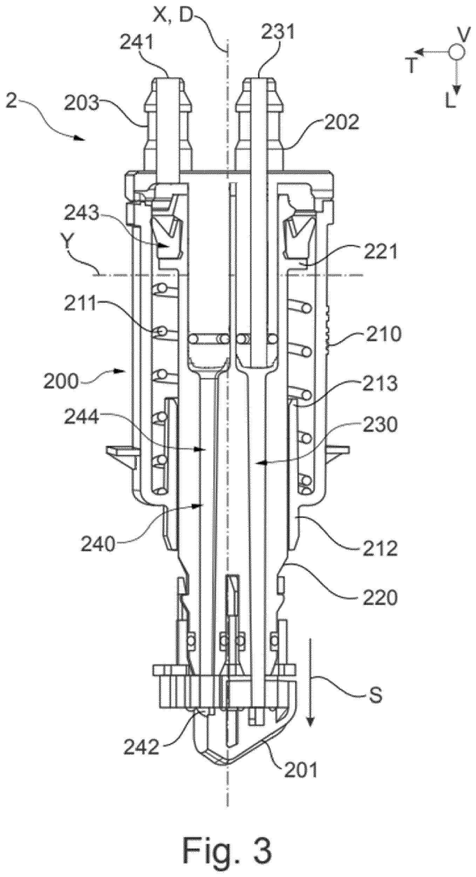

La figure 3 est une vue en coupe longitudinale d'un premier mode de réalisation d'un dispositif de nettoyage télescopique 2 selon l'invention.

Le dispositif de nettoyage télescopique 2 comprend un corps d'acheminement 200 de conformation générale cylindrique et qui s'étend majoritairement selon la direction longitudinale X. Ce corps d'acheminement 200 comprend une partie fixe 210 et une partie mobile 220, la partie mobile 220 formant piston coulissant à l'intérieur du cylindre formé par la partie fixe 210. On comprend que la partie mobile 220 est mobile le long de l'axe de déploiement D du dispositif de nettoyage télescopique 2. Autrement dit, lorsque l'on parle de « déploiement du dispositif de nettoyage », on entend plus particulièrement « déploiement de la partie mobile du corps d'acheminement du dispositif de nettoyage », étant entendu que dans la suite de la description ces deux expressions seront utilisées sans distinction. Plus particulièrement, le dispositif de nettoyage 2 se déplace dans un premier sens de déploiement selon un sens S illustré sur la figure 3 pour prendre la position déployée et dans un deuxième sens opposé de rétractation pour reprendre la première position dite rétractée.

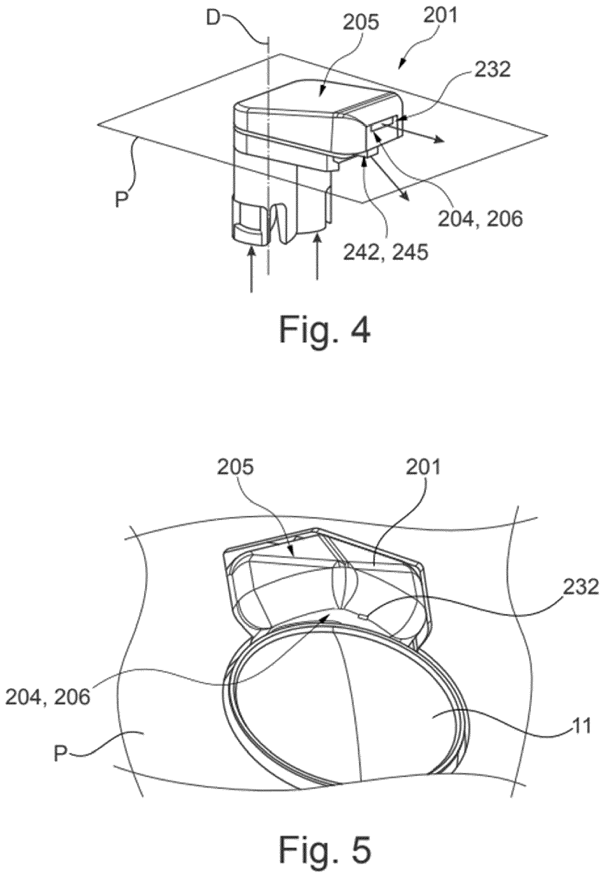

Tel que représenté, le corps d'acheminement 200 comprend au moins un premier canal 230 destiné à l'acheminement du premier fluide depuis un premier orifice d'admission 231 jusqu'à un premier orifice de distribution 232 - par exemple visible sur les figures 4 et 5 - et au moins un deuxième canal 240 destiné à l'acheminement du deuxième fluide depuis un deuxième orifice d'admission 241 jusqu'à un deuxième orifice de distribution 242. Plus particulièrement, le premier orifice de distribution 232 et le deuxième orifice de distribution 242 sont ménagés dans un embout de distribution 201 qui forme une première extrémité longitudinale libre du corps d'acheminement 200 du dispositif de nettoyage 2, et qui est disposé dans le prolongement direct de l'extrémité libre du piston formé par la partie mobile 220.

Plus particulièrement, l'embout de distribution 201 peut présenter toute forme appropriée au design du véhicule dans lequel le dispositif est installé, dès lors qu'il comporte une face de projection 204, visible sur les figures 4 à 8, dans laquelle sont disposés les orifices de distribution 232, 242, la face de projection étant la face en regard de la surface optique à nettoyer. L'embout de distribution 201 comporte également une face de couverture 205, qui correspond à la face d'extrémité axiale de l'embout et du dispositif de nettoyage télescopique. Dans la première position, seule la face d'extrémité terminale est intégralement visible, et la face de projection 204 est partiellement escamotée, une partie distale 206 de la face de projection 204 reliée à la face d'extrémité terminale s'étendant hors du logement du dispositif de nettoyage télescopique. Tel que cela sera décrit ci-après, seul le premier orifice de distribution est disposé dans cette partie distale 206 de la face de projection 204.

L'extrémité longitudinale opposée du corps d'acheminement 200 est quant à elle formée par une bride venant fermer le cylindre formant la partie fixe et comportant un premier tube d'admission 202 dans lequel est ménagé le premier orifice d'admission 231 et un deuxième tube d'admission 203 dans lequel est ménagé le deuxième orifice d'admission 241. On comprend que le premier orifice d'admission 231 est connecté à un premier réservoir qui contient le premier fluide, par exemple de l'air comprimé, et le deuxième orifice d'admission 241 est quant à lui connecté à un deuxième réservoir qui contient le deuxième fluide, par exemple le liquide de nettoyage, les réservoirs n'étant pas représentés sur les figures.

Tel qu'illustré, le premier canal 230 et le deuxième canal 240 sont distincts et ne communiquent pas, de sorte que le premier fluide et le deuxième fluide ne sont jamais en contact.

Le premier tube d'admission 202 est disposé longitudinalement dans l'axe du premier canal 230, et un canal étanche guide directement l'air admis par le premier tube d'admission vers le premier orifice de distribution 232, quel que soit le déploiement du dispositif de nettoyage. On comprend de ceci que le premier canal 230 est ménagé principalement dans la partie mobile 220 du corps d'acheminement 200.

Par contre, le deuxième tube d'admission 203 est excentré par rapport au deuxième canal 240 de sorte que le liquide de nettoyage admis ne pénètre pas directement dans le deuxième canal 240. Lorsque le liquide de nettoyage est injecté dans le dispositif, il pénètre dans un premier temps dans une chambre tampon 243 et le remplissage de cette chambre tampon participe à exercer une pression sur le piston formé par la partie mobile 220. On comprend de ceci que le deuxième canal 240 comprend une première portion 243 formée par la chambre tampon et qui s'étend dans la partie fixe 210 du corps d'acheminement 200 ainsi qu'une deuxième portion 244 qui s'étend dans la partie mobile 220 du corps d'acheminement 200 en parallèle du premier canal 230. La première portion 243 du deuxième canal 240 est relié fluidiquement à l'orifice d'admission 241 du deuxième fluide et que la deuxième portion 244 de ce deuxième canal 240 est quant à elle reliée fluidiquement au deuxième orifice de distribution 242.

La chambre tampon 243 est délimitée, longitudinalement, par la bride de fermeture portant les tubes d'admission et par une couronne 221 qui forme saillie sur un pourtour de la partie mobile 220. Autrement dit, le fluide de nettoyage pénétrant dans cette chambre tampon tend à pousser sur le piston formant la partie mobile pour l'éloigner de l'orifice d'admission et la forcer à se déployer. On comprend de la figure 3 que la deuxième portion 244 du deuxième canal 240 et l'orifice de distribution 242 correspondant est inaccessible au deuxième fluide tant que le dispositif de nettoyage 2 est en position rétractée et que le fluide peut librement circuler de l'orifice d'admission à l'orifice de distribution via la chambre tampon et le deuxième canal lorsque le dispositif de nettoyage 2 selon l'invention est en position déployée.

Un dispositif de rappel élastique 211 est logé entre une paroi du cylindre formant la partie fixe 210 et la face de la couronne 221 tournée à l'opposé de la chambre tampon 243. Le dispositif de rappel élastique 211 est configuré pour se comprimer progressivement, au fur et à mesure que la chambre tampon 243 associé au deuxième canal 240 se remplit du deuxième fluide. On comprend que c'est la pression exercée par ce deuxième fluide sur la partie mobile 220, via la couronne 221 ménagée en saillie de la partie mobile 220, qui comprime le dispositif de rappel élastique 211 et qui permet le déploiement de cette partie mobile 220, de sorte à ce que cette dernière coulisse, selon le sens S, rendant alors accessible la deuxième portion 244 du deuxième canal 240 au deuxième fluide, et permettant ainsi la projection de ce deuxième fluide par le deuxième orifice de distribution 242. On comprend que par la suite, lorsque le deuxième fluide n'est plus injecté dans le dispositif via le deuxième orifice d'admission, le dispositif de rappel élastique 211 vise à permettre la rétractation du dispositif de nettoyage 2, entrainant alors le coulissement de la partie mobile 240 du corps d'acheminement 200 selon un sens contraire au sens S de déploiement de sorte que le dispositif de nettoyage 2 revienne à sa position rétractée.

Dans l'exemple illustré sur la figure 3, une extrémité longitudinale de la partie fixe 210 du corps d'acheminement 200 prend la forme d'un manchon 212 de guidage de la partie mobile 220 de ce corps d'acheminement 200. De plus, une extrémité longitudinale 213 de ce manchon 212 forme butée à la couronne 221 ménagées en saillie de la partie mobile 210. Ainsi, le coulissement de la partie mobile 220 par rapport à la partie fixe 210 est limitée longitudinalement par cette butée.

Le premier orifice d'admission 231 peut comprendre un moyen d'obturation - non représenté ici - configuré pour prendre une position ouverte dans laquelle il autorise l'admission du premier fluide et son passage à travers le premier canal en direction du premier orifice de distribution 232, notamment lorsque le dispositif et l'embout de distribution est en première position rétractée, et une position fermée dans laquelle il interdit l'admission de l'air dans le premier canal 240, notamment lorsque le dispositif et l'embout de distribution est en deuxième position déployée. De manière équivalente, le deuxième orifice d'admission 231 peut comprendre un moyen d'obturation - non représenté ici - configuré pour prendre une position ouverte dans laquelle il autorise l'admission du deuxième fluide et son passage à travers le deuxième canal en direction du deuxième orifice de distribution 232, notamment lorsque le dispositif et l'embout de distribution est en deuxième position déployée, et une position fermée dans laquelle il interdit l'admission de fluide de nettoyage dans le dispositif et notamment dans le deuxième canal afin de conserver le dispositif et l'embout de distribution en première position rétractée.

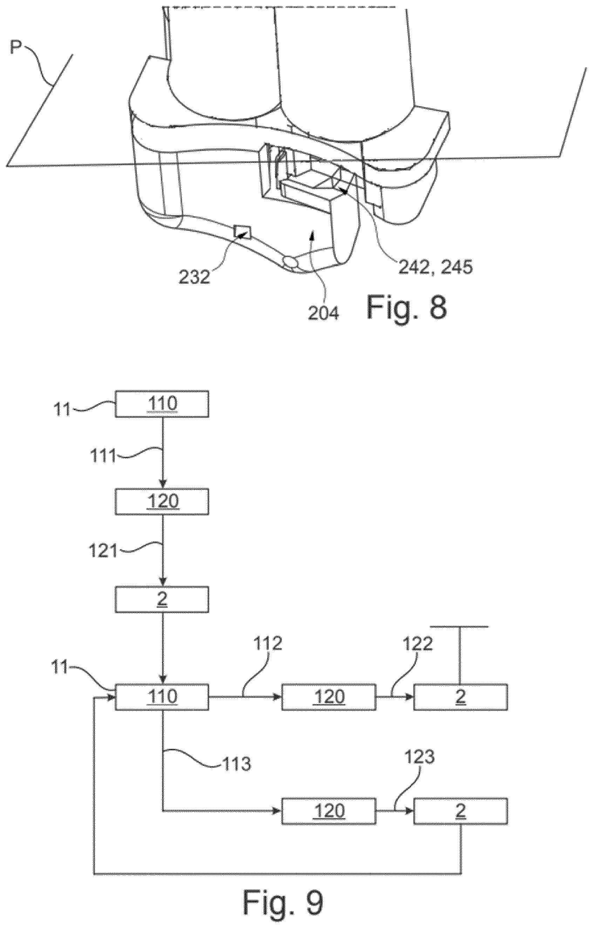

Tel que cela sera plus amplement détaillé ci-après, en référence à la figure 9, le véhicule comprenant le dispositif de nettoyage 2 selon l'invention comprend également au moins une unité de contrôle configurée pour piloter l'ouverture et la fermeture de ce ou ces moyens d'obturation.

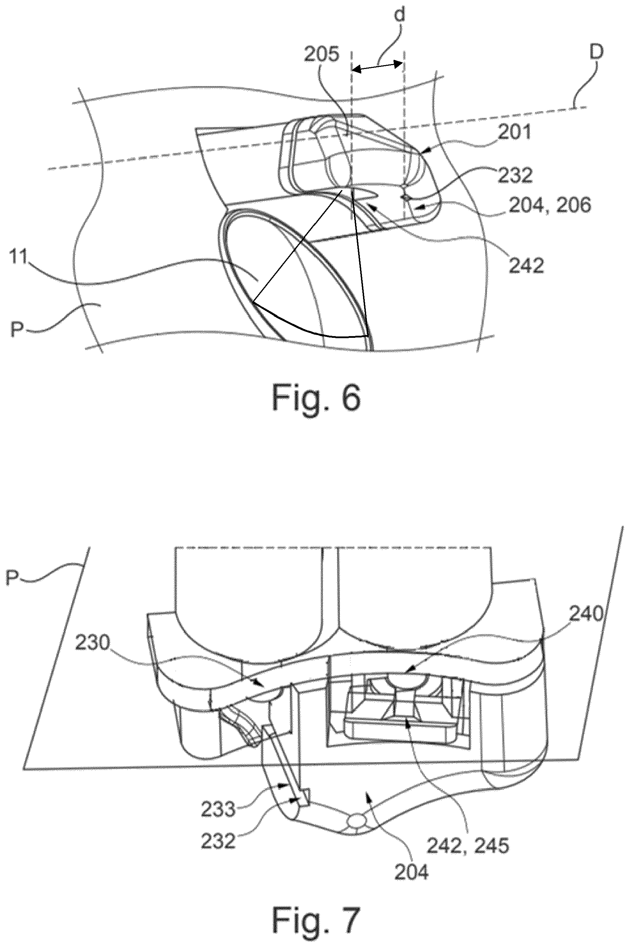

Selon l'invention, et tel que cela est notamment illustré sur la représentation schématique de la figure 4, le premier orifice de distribution 232 et le deuxième orifice de distribution 242 sont décalés l'un par rapport à l'autre le long de l'axe de déploiement D du dispositif de nettoyage télescopique 2. Autrement dit, un décalage axial d mesuré entre le premier orifice de distribution 232 et le deuxième orifice de distribution 242 parallèlement à cet axe de déploiement D présente une valeur non nulle. Ce décalage d est également visible sur la figure 6. Avantageusement, la valeur non nulle du décalage d est comprise entre deux et trente millimètres.

Par ailleurs, le décalage axial entre le premier orifice de distribution 232 par lequel est susceptible de sortir de l'air pour le séchage et le deuxième orifice de distribution 242 par lequel est susceptible de sortir un liquide de nettoyage est ordonné de sorte que le deuxième orifice de distribution est situé le plus proche de la partie fixe du dispositif, le premier orifice de distribution étant l'orifice le plus en saillie de la surface de la carrosserie du véhicule, c'est-à-dire du plan P dans lequel s'inscrit la surface extérieure du capteur/émetteur 11 à nettoyer.

La valeur du décalage axial est notamment déterminée pour que dans la première position, dans laquelle l'embout de distribution est au moins partiellement escamoté de sorte que le deuxième orifice de distribution 242 n'est pas apparent et caché en retrait de la surface de la carrosserie, le premier orifice de distribution soit lui dégagé et libre de toute obstruction pour la projection d'air en direction de la surface de nettoyage. Tel qu'illustré schématiquement sur la figure 4, le premier orifice de distribution 232 est configuré pour générer en sortie un jet d'air sensiblement plat, c'est-à-dire sensiblement parallèle à la surface de la carrosserie. Avantageusement, le premier orifice de distribution 232 est configuré de sorte qu'une direction principale de projection du premier fluide forme un angle compris entre -10° et 10° avec le plan dans lequel s'inscrit majoritairement la surface extérieure du capteur/émetteur 11 à nettoyer.

On comprend de ce qui précède, à savoir le décalage axial des orifices de distribution, que le premier orifice de distribution 232 et le deuxième orifice de distribution 242 sont tous deux dégagés et libres de tout obstruction, c'est à dire à l'extérieur de la carrosserie et à distance du plan P dans lequel s'inscrit la surface extérieure du capteur/émetteur optique à nettoyer, lorsque le dispositif de nettoyage télescopique 2 est dans sa deuxième position, dite position déployée. On comprend également que dans cette deuxième position, l'agencement du premier orifice de distribution 232 générant un jet à plat ne permet pas de rendre efficace et opérationnelle à cet instant un nettoyage par projection d'air. Tel que cela sera décrit ci-après, l'opération de séchage par projection d'air via le premier embout de distribution se fait lors du retour en position rétractée du dispositif, entre la deuxième position déployée et la première position rétractée.

Tel qu'illustré schématiquement sur la figure 4, le deuxième orifice de distribution est configuré pour générer en sortie un jet de liquide de nettoyage incliné par rapport à la surface de la carrosserie, en direction de celle-ci de manière à projeter le liquide de nettoyage sur la surface à nettoyer avec un angle d'impact favorable pour décaper la surface à nettoyer. Plus particulièrement, le deuxième orifice de distribution est configuré pour qu'une direction principale de projection du deuxième fluide forme un angle compris entre 30° et 60° avec le plan P dans lequel s'inscrit majoritairement la surface extérieure du capteur/émetteur 11 à nettoyer, l'angle étant tel que le jet de liquide de nettoyage est rabattu en direction de ce plan.

L'embout de distribution selon l'invention est configuré de telle sorte que les sorties de fluide sont étagées, c'est-à-dire disposées axialement de part et d'autre d'un plan de coupure perpendiculaire à l'axe de déploiement du dispositif de nettoyage télescopique, représenté schématiquement sur la figure 4. Et les sorties de fluide sont configurées pour que les fluides projetés respectivement par chacune de ces sorties s'étendent d'un côté de ce plan de coupure.

Les figures 5 et 7 illustrent respectivement la première position et la deuxième position du dispositif de nettoyage 2 selon l'invention. Tel que précédemment évoqué, la première position diffère de la deuxième position en ce que, dans la première position du dispositif de nettoyage, seul le premier orifice de distribution est dégagé pour que le premier fluide, c'est-à-dire l'air, puisse être projeté, tandis que dans la deuxième position du dispositif de nettoyage, les deux orifices sont dégagés notamment pour permettre une projection du deuxième fluide, c'est le liquide de nettoyage, dans cette deuxième position puis une projection de l'air pour sécher la surface optique du résidu de liquide de nettoyage, et plus particulièrement lors du retour en position du dispositif.

En d'autres termes, lorsque le dispositif de nettoyage 2 est dans sa première position illustrée sur la figure 5, seule une extrémité longitudinale de l'embout de distribution 201 s'étend au-delà de la carrosserie du véhicule, c'est-à-dire au-delà du plan P dans lequel s'inscrit la surface extérieure du capteur/émetteur 11 à nettoyer, et plus particulièrement la face de couverture 205 ainsi que la partie distale 206 de la face de projection 204 dans laquelle est réalisé le premier orifice de distribution. En revanche, lorsque le dispositif de nettoyage 2 est dans sa deuxième position illustrée sur la figure 7, la totalité de l'embout de distribution 201 s'étend au-delà du plan dans lequel s'inscrit la surface extérieure du capteur/émetteur 11.

La figure 6 illustre en outre le décalage axial d de valeur non nulle mesurée entre le premier orifice de distribution 232 et le deuxième orifice de distribution 242. Tel que précédemment évoqué, ce décalage d est mesuré parallèlement à l'axe de déploiement du dispositif de nettoyage. Plus particulièrement, ce décalage axial d est mesuré parallèlement à cet axe de déploiement, entre un centre du premier orifice de distribution 232 et un centre du deuxième orifice de distribution 242.

Par ailleurs, un jet de liquide de nettoyage a été représenté à titre d'exemple sur la figure 6 pour illustrer l'inclinaison du jet par rapport à la surface optique à nettoyer. Tel que cela a pu être précisé précédemment, le jet de liquide de nettoyage en sortie de l'embout de distribution présente un angle de valeur comprise entre 30 et 60°. Cet angle de projection est notamment obtenu par la présence d'une rampe 245 disposée sur le trajet du liquide de nettoyage en sortie du deuxième canal, tel que cela est notamment visible sur les figures 7 et 8.

Ces figures 7 et 8 rendent notamment visibles un détail de l'embout de distribution 201 et la surface de carrosserie en saillie de laquelle s'étend le dispositif lors de son déploiement télescopique, étant entendu que ces figures représentent des vues depuis l'intérieur du véhicule.

Sur la figure 7, on a illustré la première position de la figure 5, avec seul le premier orifice de distribution qui s'étend au-delà de la surface de carrosserie. L'embout de distribution a été partiellement coupé pour rendre visible un conduit de circulation 233 reliant le premier canal 230 au premier orifice de distribution 232. La faible section de passage formée par ce conduit de circulation permet la projection d'un air sous pression efficace pour le séchage ou l'évacuation de salissures. Le premier orifice de distribution 232 est formé par l'extrémité débouchant du conduit de circulation 233 débouchant sur la face de projection 204.

Sur la figure 8, on a illustré la deuxième position de la figure 6, avec les deux orifices de distribution 231, 232 qui s'étendent au-delà de la surface de carrosserie. L'embout de distribution a été partiellement coupé pour rendre visible la forme de rampe 245 réalisée en sortie du deuxième canal 240 au niveau du deuxième orifice de distribution 232.

La figure 9 illustre enfin, de façon schématique, sous forme synoptique, un procédé de nettoyage mettant en œuvre le dispositif de nettoyage 2 selon l'invention.

Le capteur/émetteur 11 dont la surface extérieure peut être nettoyée et/ou séchée grâce au dispositif de nettoyage 2 selon l'invention comprend avantageusement un système de détection 110 de la présence d'eau et/ou de salissures. Ainsi, lorsque ce système de détection 110 détecte effectivement la présence d'eau et/ou de salissure sur la surface extérieure du capteur/émetteur 11, il envoie une première information 111 correspondante à l'unité de contrôle 120 du véhicule.

Cette unité de contrôle 120 envoie alors une première instruction 121 au dispositif de nettoyage 2 selon l'invention de sorte que ce dernier projette le premier fluide sur la surface extérieure du capteur/émetteur 11, en l'espèce de l'air. Il suit alors une étape de contrôle de l'état de la surface extérieure du capteur/émetteur 11 par le système de détection 110. S'il ressort de cette étape de contrôle que la surface extérieure du capteur/émetteur 11 est propre, alors le système de détection envoie une deuxième information 112 correspondante à l'unité de contrôle 120 qui peut alors transmettre une deuxième instruction 122 au dispositif de nettoyage 2, cette deuxième instruction 122 ayant pour effet de mettre fin au procédé de nettoyage qui reprendra, tel que décrit, lorsque le système de détection 110 détectera à nouveau la présence d'eau et/ou de salissures sur cette surface extérieure du capteur/émetteur 11.

En revanche, s'il ressort de l'étape de contrôle que la surface extérieure du capteur/émetteur 11 n'est pas correctement nettoyée, alors le système de détection 110 envoie une troisième information 113 correspondante à l'unité de contrôle 120. L'unité de contrôle 120 est alors configurée pour envoyer une troisième instruction 123 au dispositif de nettoyage 2 de sorte que le moyen d'obturation du deuxième orifice d'admission du deuxième fluide décrit précédemment prenne sa position ouverte de sorte à permettre à ce deuxième fluide de rejoindre le deuxième canal et donc de permettre le déploiement du dispositif de nettoyage et la projection de ce deuxième fluide, en l'espèce du liquide de nettoyage. Le cas échéant, une autre instruction est donnée pour qu'une projection du premier fluide soit réalisée, après la projection du deuxième fluide, lors du retour en première position du dispositif télescopique, de sorte à sécher les résidus du deuxième fluide. S'en suit alors une nouvelle étape de contrôle par le système de détection 110 similaire à l'étape de contrôle décrite ci-dessus. Il est entendu que les étapes de projection du liquide de nettoyage et de séchage de ce liquide de nettoyage peuvent être réalisées autant de fois que nécessaire, c'est-à-dire qu'elles sont répétées jusqu'à ce que la totalité, ou la quasi-totalité, de l'eau et/ou des salissures présentes sur la surface extérieure du capteur/émetteur soit éliminée.

La présente invention propose ainsi un moyen simple et peu coûteux qui permet d'économiser du liquide de nettoyage, notamment par la possibilité de réaliser une opération de nettoyage par soufflage d'air sans que le mécanisme de déploiement du dispositif télescopique ne soit mis en œuvre. On économise ainsi du liquide de nettoyage et une usure du dispositif mécanique non nécessaire, sans toutefois que la qualité du nettoyage des capteurs/émetteurs présents sur un véhicule ne soit altérée.

L'invention ne saurait toutefois se limiter aux moyens et configurations décrits et illustrés ici.

En particulier, la forme et la disposition du premier orifice de distribution et du deuxième orifice de distribution peuvent être modifiées sans nuire à l'invention dans la mesure où elles remplissent les fonctionnalités décrites et illustrées dans le présent document.

## Revendications

1. Dispositif de nettoyage télescopique (2), destiné à projeter au moins un premier fluide et au moins un deuxième fluide vers une surface extérieure d'un capteur/émetteur (11) d'un véhicule automobile (1), le dispositif de nettoyage télescopique (2) comprenant un embout de distribution (201) dans lequel sont disposés au moins un premier orifice de distribution (232) du premier fluide et au moins un deuxième orifice de distribution (242) du deuxième fluide, le dispositif de nettoyage télescopique (2) étant configuré pour se déployer le long d'un axe de déploiement (D) entre une première position rétractée et une deuxième position déployée, le premier orifice de distribution (232) et le deuxième orifice de distribution (242) étant décalés l'un par rapport à l'autre le long de l'axe de déploiement (D) du dispositif de nettoyage, le dispositif de nettoyage télescopique (2) étant **caractérisé en ce qu'**il est configuré de telle sorte que dans la première position rétractée, seul le premier orifice de distribution (232) est libre et dans la deuxième position déployée, le premier orifice de distribution (232) et le deuxième orifice de distribution (242) sont libres.

2. Dispositif de nettoyage télescopique (2) selon la revendication précédente, comprenant au moins un premier orifice d'admission (231) du premier fluide et au moins un deuxième orifice d'admission (241) du deuxième fluide, le premier orifice d'admission (231) étant relié au premier orifice de distribution (232) par un premier canal (230) et le deuxième orifice d'admission (241) étant relié au deuxième orifice de distribution (242) par un deuxième canal (240) distinct du premier canal (230).

3. Dispositif de nettoyage télescopique (2) selon la revendication précédente, comprenant un corps d'acheminement (200) qui comprend au moins une partie fixe (210) et une partie mobile (220), l'embout de distribution (201) étant ménagé en extrémité de la partie mobile (220).

4. Dispositif de nettoyage télescopique (2) selon l'une quelconque des revendications précédentes, dans lequel le premier fluide est de l'air comprimé et dans lequel le deuxième fluide est un liquide de nettoyage.

5. Dispositif de nettoyage télescopique (2) selon les deux revendications précédentes, dans lequel le premier orifice de distribution (232) associé à l'air comprimé est agencé dans l'embout de distribution à plus grande distance que ne l'est le deuxième orifice de distribution (242) associé au liquide de nettoyage.

6. Dispositif de nettoyage télescopique selon l'une des revendications précédentes, dans lequel l'embout de distribution (201) comporte une face de projection (204) en regard de la surface optique à nettoyer et dans laquelle sont disposés les orifices de distribution (232, 242), ainsi qu'une face de couverture (205) formée par la face d'extrémité axiale de l'embout et du dispositif de nettoyage télescopique, la face de projection (204) étant partiellement escamotée dans la première position pour laisser libre le premier orifice de distribution ménagé dans une partie distale (206) de la face de projection (204).

7. Dispositif de nettoyage télescopique selon la revendication précédente, dans lequel le premier orifice de distribution est configuré pour former un jet de premier fluide sensiblement perpendiculaire à l'axe de déploiement du dispositif télescopique de nettoyage.

8. Dispositif de nettoyage télescopique selon la revendication 6 ou 7, dans lequel le deuxième orifice de distribution comporte une rampe (245) configurée pour rabattre le jet de deuxième fluide en sortie de l'embout de distribution vers la surface du capteur/émetteur à nettoyer.

9. Véhicule automobile (1) équipé d'un ensemble de détection (10), **caractérisé en ce qu'**il comprend au moins un dispositif de nettoyage télescopique (2) selon l'une quelconque des revendications précédentes, ce dispositif de nettoyage télescopique (2) étant destiné au nettoyage d'une surface extérieure d'au moins un capteur/émetteur (11) de l'ensemble de détection.

10. Procédé de nettoyage d'une surface extérieure d'un capteur/émetteur (11) d'un ensemble de détection (10) d'un véhicule automobile (1) selon la revendication précédente, au cours duquel une unité de contrôle (120) reçoit une première information (111) relative à la détection de la présence d'eau et/ou de salissures sur la surface extérieure du capteur/émetteur (11), le procédé comprenant, lorsque la première information (111) relative à la détection de la présence d'eau et/ou de salissures est positive, au moins une première étape au cours de laquelle l'unité de contrôle (120) transmet une première instruction (121) au dispositif de nettoyage télescopique (2) pour que celui-ci projette le premier fluide, et au moins une deuxième étape de contrôle de la présence d'eau et/ou de salissures sur la surface extérieure du capteur/émetteur (11) par le système de détection (110).

11. Procédé selon la revendication précédente, au cours duquel l'unité de contrôle (120) reçoit, après la réalisation de la deuxième étape, une deuxième information (112) correspondant à une situation dans laquelle le capteur/émetteur (11) est propre, le procédé comprenant une troisième étape au cours de laquelle l'unité de contrôle (120) envoie une deuxième instruction (122) au dispositif de nettoyage télescopique (2) qui entraine l'arrêt du procédé.

12. Procédé selon la revendication 10, au cours duquel l'unité de contrôle (120) reçoit, après la réalisation de la deuxième étape, une troisième information (113) correspondant à une situation dans laquelle le système de détection (110) détecte la présence d'eau et/ou de salissures sur la surface extérieure du capteur/émetteur (11), le procédé comprenant une troisième étape au cours de laquelle l'unité de contrôle (120) envoie une troisième instruction (123) au dispositif de nettoyage télescopique (2) qui entraine le déploiement de ce dispositif de nettoyage télescopique (2), la projection du deuxième fluide sur la surface extérieure du capteur/émetteur (11) puis la projection du premier fluide sur cette surface extérieure du capteur/émetteur (11), le procédé comprenant au moins une quatrième étape au cours de laquelle le système de détection (110) contrôle la présence d'eau et/ou de salissures sur la surface extérieure du capteur/émetteur (11).

## Patentansprüche

1. Teleskopische Reinigungsvorrichtung (2), die dazu bestimmt ist, mindestens ein erstes Fluid und mindestens ein zweites Fluid in Richtung einer Außenoberfläche eines Sensors/Senders (11) eines Kraftfahrzeugs (1) zu spritzen, wobei die teleskopische Reinigungsvorrichtung (2) ein Abgabeendstück (201) beinhaltet, in dem mindestens eine erste Abgabeöffnung (232) für das erste Fluid und mindestens eine zweite Abgabeöffnung (242) für das zweite Fluid angeordnet sind, wobei die teleskopische Reinigungsvorrichtung (2) dazu konfiguriert ist, entlang einer Verfahrachse (D) zwischen einer ersten zurückgezogenen Stellung und einer zweiten ausgefahrenen Stellung zu verfahren, wobei die erste Abgabeöffnung (232) und die zweite Abgabeöffnung (242) entlang der Verfahrachse (D) der Reinigungsvorrichtung in Bezug aufeinander versetzt sind, wobei die teleskopische Reinigungsvorrichtung (2) **dadurch gekennzeichnet ist, dass** sie so konfiguriert ist, dass in der ersten zurückgezogenen Stellung nur die erste Abgabeöffnung (232) frei ist und in der zweiten ausgefahrenen Stellung die erste Abgabeöffnung (232) und die zweite Abgabeöffnung (242) frei sind.

2. Teleskopische Reinigungsvorrichtung (2) nach dem vorhergehenden Anspruch, die mindestens eine erste Einlassöffnung (231) für das erste Fluid und mindestens eine zweite Einlassöffnung (241) für das zweite Fluid beinhaltet, wobei die erste Einlassöffnung (231) über einen ersten Kanal (230) mit der ersten Abgabeöffnung (232) verbunden ist und die zweite Einlassöffnung (241) über einen zweiten Kanal (240), der sich von dem ersten Kanal (230) unterscheidet, mit der zweiten Abgabeöffnung (242) verbunden ist.

3. Teleskopische Reinigungsvorrichtung (2) nach dem vorhergehenden Anspruch, die einen Zuführkörper (200) beinhaltet, der mindestens einen festen Abschnitt (210) und einen mobilen Abschnitt (220) beinhaltet, wobei das Abgabeendstück (201) am Ende des mobilen Abschnitts (220) eingerichtet ist.

4. Teleskopische Reinigungsvorrichtung (2) nach einem beliebigen der vorhergehenden Ansprüche, wobei das erste Fluid Druckluft ist und wobei das zweite Fluid eine Reinigungsflüssigkeit ist.

5. Teleskopische Reinigungsvorrichtung (2) nach den beiden vorhergehenden Ansprüchen, wobei die erste Abgabeöffnung (232), die mit der Druckluft assoziiert ist, in größerer Entfernung in dem Abgabeendstück angeordnet ist als die zweite Abgabeöffnung (242), die mit der Reinigungsflüssigkeit assoziiert ist.

6. Teleskopische Reinigungsvorrichtung nach einem der vorhergehenden Ansprüche, wobei das Abgabeendstück (201) eine Spritzfläche (204), die gegenüber der zu reinigenden optischen Fläche liegt und in der die Abgabeöffnungen (232, 242) angeordnet sind, sowie eine Abdeckfläche (205), die durch die axiale Endfläche des Endstücks und der teleskopischen Reinigungsvorrichtung gebildet wird, umfasst, wobei die Spritzfläche (204) in der ersten Stellung teilweise versenkt ist, um die erste Abgabeöffnung, die in einem distalen Abschnitt (206) der Spritzfläche (204) eingerichtet ist, frei zu lassen.

7. Teleskopische Reinigungsvorrichtung nach dem vorhergehenden Anspruch, wobei die erste Abgabeöffnung dazu konfiguriert ist, einen Strahl eines ersten Fluids zu bilden, der zu der Verfahrachse der teleskopischen Reinigungsvorrichtung im Wesentlichen senkrecht ist.

8. Teleskopische Reinigungsvorrichtung nach Anspruch 6 oder 7, wobei die zweite Abgabeöffnung eine Rampe (245) umfasst, die dazu konfiguriert ist, den Strahl eines zweiten Fluids am Ausgang des Abgabeendstücks in Richtung der zu reinigenden Oberfläche des Sensors/Senders zu lenken.

9. Kraftfahrzeug (1), das mit einer Detektionsanordnung (10) ausgerüstet ist, **dadurch gekennzeichnet, dass** es mindestens eine teleskopische Reinigungsvorrichtung (2) nach einem beliebigen der vorhergehenden Ansprüche beinhaltet, wobei diese teleskopische Reinigungsvorrichtung (2) für die Reinigung einer Außenoberfläche mindestens eines Sensors/Senders (11) der Detektionsanordnung bestimmt ist.

10. Verfahren zur Reinigung einer Außenoberfläche eines Sensors/Senders (11) einer Detektionsanordnung (10) eines Kraftfahrzeugs (1) nach dem vorhergehenden Anspruch, während dessen eine Steuereinheit (120) eine erste Information (111) in Bezug auf die Detektion des Vorhandenseins von Wasser und/oder Verunreinigungen auf der Außenoberfläche des Sensors/Senders (11) empfängt, wobei das Verfahren, wenn die erste Information (111) in Bezug auf die Detektion des Vorhandenseins von Wasser und/oder Verunreinigungen positiv ist, mindestens einen ersten Schritt, während dessen die Steuereinheit (120) eine erste Anweisung (121) an die teleskopische Reinigungsvorrichtung (2) überträgt, damit diese das erste Fluid spritzt, und mindestens einen zweiten Schritt der Kontrolle des Vorhandenseins von Wasser und/oder Verunreinigungen auf der Außenoberfläche des Sensors/Senders (11) durch das Detektionssystem (110) beinhaltet.

11. Verfahren nach dem vorhergehenden Anspruch, während dessen die Steuereinheit (120) nach der Ausführung des zweiten Schritts eine zweite Information (112) empfängt, die einer Situation entspricht, in der der Sensor/Sender (11) sauber ist, wobei das Verfahren einen dritten Schritt beinhaltet, während dessen die Steuereinheit (120) eine zweite Anweisung (122) an die teleskopische Reinigungsvorrichtung (2) sendet, die den Halt des Verfahrens bewirkt.

12. Verfahren nach Anspruch 10, während dessen die Steuereinheit (120) nach der Ausführung des zweiten Schritts eine dritte Information (113) empfängt, die einer Situation entspricht, in der das Detektionssystem (110) das Vorhandensein von Wasser und/oder Verunreinigungen auf der Außenoberfläche des Sensors/Senders (11) detektiert, wobei das Verfahren einen dritten Schritt beinhaltet, während dessen die Steuereinheit (120) eine dritte Anweisung (123) an die teleskopische Reinigungsvorrichtung (2) sendet, die das Ausfahren dieser teleskopischen Reinigungsvorrichtung (2), das Spritzen des zweiten Fluids auf die Außenoberfläche des Sensors/Senders (11) und dann das Spritzen des ersten Fluids auf diese Außenoberfläche des Sensors/Senders (11) bewirkt, wobei das Verfahren mindestens einen vierten Schritt beinhaltet, während dessen das Detektionssystem (110) das Vorhandensein von Wasser und/oder Verunreinigungen auf der Außenoberfläche des Sensors/Senders (11) kontrolliert.

## Claims

1. A telescopic cleaning device (2), intended to spray at least a first fluid and at least a second fluid toward an exterior surface of a sensor/emitter (11) of a motor vehicle (1), the telescopic cleaning device (2) comprising a distribution endpiece (201) in which at least a first distribution orifice (232) for the first fluid and at least a second distribution orifice (242) for the second fluid are arranged, the telescopic cleaning device (2) being configured to deploy along an axis of deployment (D), between a retracted first position and a deployed second position, the first distribution orifice (232) and the second distribution orifice (242) being offset from one another along the axis of deployment (D) of the cleaning device (2), the telescopic cleaning device (2) being **characterized in that** it is configured such that in the retracted first position only the first distribution orifice (232) is free, and in the deployed second position the first distribution orifice (232) and the second distribution orifice (242) are free.

2. The telescopic cleaning device (2) as claimed in the preceding claim, comprising at least a first inlet orifice (231) for the first fluid and at least a second inlet orifice (241) for the second fluid, the first inlet orifice (231) being connected to the first distribution orifice (232) by a first duct (230) and the second inlet orifice (241) being connected to the second distribution orifice (242) by a second duct (240) distinct from the first duct (230).

3. The telescopic cleaning device (2) as claimed in the preceding claim, comprising a conveying body (200) which comprises at least one fixed part (210) and one moving part, (220) the distribution endpiece (201) being formed at the end of the moving part (220).

4. The telescopic cleaning device (2) as claimed in any one of the preceding claims, wherein the first fluid is compressed air and wherein the second fluid is a cleaning liquid.

5. The telescopic cleaning device (2) as claimed in the two preceding claims, wherein the first distribution orifice (232) associated with the compressed air is arranged in the distribution endpiece at a greater distance than the second distribution orifice (242) associated with the cleaning liquid is.

6. The telescopic cleaning device (2) as claimed in any one of the preceding claims, wherein the distribution endpiece (201) comprises a spray face (204) facing the optical surface that is to be cleaned and in which the distribution orifices (232, 242) are arranged, and a cover face (205) formed by the axial end face of the endpiece and of the telescopic cleaning device, the spray face (204) being partially withdrawn in the first position in order to leave the first distribution orifice formed in a distal part (206) of the spray face (204) free.

7. The telescopic cleaning device as claimed in the preceding claim, wherein the first distribution orifice is configured to form a jet of first fluid substantially perpendicular to the axis of deployment of the telescopic cleaning device.

8. The telescopic cleaning device as claimed in claim 6 or 7, wherein the second distribution orifice comprises a ramp (245) configured to deflect the jet of second fluid leaving the distribution endpiece toward the surface of the sensor/emitter that is to be cleaned.

9. A motor vehicle (1) equipped with a detection assembly (10), **characterized in that** it comprises at least one telescopic cleaning device (2) as claimed in any one of the preceding claims, this telescopic cleaning device (2) being intended for cleaning an exterior surface of at least one sensor/emitter (11) of the detection assembly.

10. A method for cleaning an exterior surface of a sensor/emitter (11) of a detection assembly (10) of a motor vehicle (1) as claimed in the preceding claim, during which a control unit (120) receives a first item of information (111) relating to detection of the presence of water and/or of dirt on the exterior surface of the sensor/emitter (11), the method comprising, when the first item of information (111) relating to the detection of the presence of water and/or of dirt is positive, at least a first step during which the control unit (120) transmits a first instruction (121) to the telescopic cleaning device (2) so that the latter sprays the first fluid, and at least a second step of checking for the presence of water and/or of dirt on the exterior surface of the sensor/emitter (11) using the detection system (110).

11. The method as claimed in the preceding claim, during which the control unit (120), after performing the second step, receives a second item of information (112) corresponding to a situation in which the sensor/emitter (11) is clean, the method comprising a third step during which the control unit (120) sends a second instruction (122) to the telescopic cleaning device (2) which leads to the cleaning method being halted.

12. The method as claimed in claim 10, during which the control unit (120), after performing the second step, receives a third item of information (113) corresponding to a situation in which the detection system (110) detects the presence of water and/or of dirt on the exterior surface of the sensor/emitter (11), the method comprising a third step during which the control unit (120) sends a third instruction (123) to the telescopic cleaning device (2) which leads to deployment of this telescopic cleaning device (2), spraying of the second fluid onto the exterior surface of the sensor/emitter (11) then the spraying of the first fluid onto this exterior surface of the sensor/emitter (11), the method comprising at least a fourth step during which the detection system (110) checks for the presence of water and/or of dirt on the exterior surface of the sensor/emitter (11).
